# EUROPÄISCHE PATENTSCHRIFT

(11) **EP 2 363 768 B1**
(45) Veröffentlichungstag und Bekanntmachung des Hinweises auf die Patenterteilung: **10.10.2012**
(21) Anmeldenummer: 10000823.4
(22) Anmeldetag: 27.01.2010
(51) Int. Cl.: G05B 19/042, G05B 19/4061, B23Q 11/00, F16D 49/00, F16P 3/12, G05B 9/02

(54) **Sicherheitsbremseinrichtung für bewegte Maschinenelemente**
Safety brake device for moving machine elements
Dispositif de frein de sécurité pour éléments de machines mobiles

(43) Veröffentlichungstag der Anmeldung: 07.09.2011
(73) Patentinhaber: Calliari, Umberto, 38010 Romeno (TN) (IT)
(72) Erfinder: Calliari, Umberto, 38010 Romeno (TN) (IT)
(74) Vertreter: Zeitler - Volpert - Kandlbinder

(56) Entgegenhaltungen:
- EP-A1- 0 995 942
- EP-A1- 1 662 349
- WO-A1-2007/060698
- DE-A1-102008 002 503
- FR-A1- 2 779 669
- US-A1- 2008 018 472

## Beschreibung

Die Erfindung betrifft eine Sicherheitsbremseinrichtung für bewegte Maschinenelemente zur Verhinderung von Verletzungen der Extremitäten des Bedieners einer Maschine, gemäß dem Oberbegriff des Anspruchs 1.

Es sind bereits einige Sicherheitseinrichtungen bekannt, um die Unfallgefährdung der Bediener an bewegten Maschinenelementen, wie Werkzeugen, Klingen, Pressen oder ähnlichem, an denen die Beschickung oder die Entnahme manuell erfolgt, zu vermindern.

Diese Sicherheitseinrichtungen sind meist sehr einfach ausgebildet und bieten keinen vollständigen Schutz für den Bediener, da nur Teile der Maschinenelemente bzw. Werkzeuge davon geschützt werden oder die Maschinenelemente eine relativ lange Nachlaufzeit haben und somit ein Erreichen der gefährlichen Bereiche dennoch möglich ist.

Die meisten derzeit bekannten Sicherheitseinrichtungen bestehen aus trennenden mechanischen Schutzabdeckungen, die die Gefahrenbereiche teilweise abdecken, oder aus Not-Halt-Einrichtungen, die die Energieversorgung trennen und manuell oder durch den Kontakt mit Schalteinrichtungen ausgelöst werden. Aber es verbleibt dennoch eine erhebliche Restgefährdung, da die bewegten Maschinenelemente auf Grund ihrer Rotations- bzw. Bewegungsenergie nicht unmittelbar stillgesetzt werden. Auch wenn vermehrt die Antriebe der Maschinen mit Bremsen ausgestattet werden, betragen die Nachlaufzeiten in jedem Fall mehrere Sekunden, wodurch Verletzungen nicht verhindert werden können.

Es ist auch schon eine Sicherheitseinrichtung bekannt, bei dem das Sägeblatt einer Kreissäge im Notfall mittels einer Aluminiumklaue stillgesetzt wird. Hier ist jedoch nachteilig, dass die Aluminiumklaue nach jedem Einsatz erneuert werden muss.

Aus der FR 2 779 669 ist weiterhin eine Sicherheitseinrichtung für Werkzeugmaschinen bekannt, die derart konzipiert ist, dass der elektrische Antrieb eines Werkzeugs der Maschine abgeschaltet wird, sobald der Bediener mit seiner Hand zu nah an das Werkzeugs gerät. Hierzu trägt der Bediener einen Handschuh mit einem elektrischen Schaltkreis, der mit einer ersten Antenne A1 verbunden ist, die wiederum mit einer zweiten Antenne zusammenwirkt, die an der Werkzeugmaschine befestigt ist. Über den in den Handschuh integrierten Schaltkreis wird die Distanz zwischen den beiden Antennen gemessen. Das Sicherheitssystem umfasst zudem noch eine dritte Antenne, über die ein Funkkontakt mit dem Schaltkreis des Handschuhs permanent aufrecht gehalten wird, und die dazu dient, die Funktionsfähigkeit des Kontakts zwischen den beiden ersten Antennen zu überprüfen. Weiterhin ist der Handschuh noch mit einem Kontaktsensor versehen, über den festgestellt wird, ob sich die Hand des Bedieners innerhalb des Handschuhs befindet.

Die WO 2007/060698 A1 offenbart Schutzbekleidung, die mit einem Steuerungselement versehen ist, das den elektrischen Antrieb eines Werkzeugs, beispielsweise einer Kettensäge, abschaltet, sobald die Schutzbekleidung zu nah an das Werkzeug gerät und insbesondere mit diesem in Kontakt kommt.

Ferner ist aus der DE 10 2008 002 503 A1 eine Werkzeugmaschine in Form einer Tischkreissäge bekannt. Diese umfasst eine Überwachungsvorrichtung mit einer Erkennungseinheit zur Anwesenheitserkennung von menschlichem Gewebe in einem Arbeitsbereich. Sofern eine solche Erkennung erfolgt, wird die Antriebseinheit automatisch gestoppt und das Sägeblatt mittels einer Notbremseinrichtung abgebremst.

Der Erfindung liegt daher die Aufgabe zu Grunde, zur Beseitigung der geschilderten Nachteile eine Sicherheitsbremseinrichtung für bewegte Maschinenelemente zu schaffen, die universell einsetzbar und von einfacher Bauart ist, leicht gewartet werden kann und gleichwohl für den Bediener eine höhere Schutzwirkung als die bisher bekannten Sicherheits- bzw. Schutzeinrichtungen bietet.

Diese Aufgabe wird mit der Erfindung durch die Merkmale des Anspruchs 1 gelöst. Vorteilhafte Ausgestaltungen hiervon sind in den weiteren Ansprüchen beschrieben.

Durch die erfindungsgemäße Sicherheitsbremseinrichtung werden im Vergleich zum Stand der Technik zahlreiche wesentliche Vorteile erzielt.

So sind bei der erfindungsgemäßen Sicherheitsbremseinrichtung wenig bis keine Verschleißteile vorhanden, so dass kaum Wartungsarbeiten anfallen und demnach die Wartungskosten reduziert sind.

Weiterhin wird durch die Erfindung vermieden, dass eine Maschine in Funktion bleibt, wenn sich kein Bediener im Arbeitsbereich befindet. Schließlich wird auch verhindert, dass der Bediener das bewegte Maschinenelement mit seinen Extremitäten erreicht, da dieses zuvor durch eine direkt am bewegten Maschinenelement wirkende Bremseinrichtung unmittelbar stillgesetzt wird. Hierdurch wird es ermöglicht, die Nachlaufzeiten der bewegten Maschinenelemente gegen Null zu bringen und so eine Verletzung des Bedieners zu verhindern.

Unter Extremitäten des Bedieners werden im Übrigen dessen Beine und vorzugsweise dessen Arme verstanden. Hierbei ist es selbstverständlich auch möglich, die Anordnung derart zu treffen, dass sämtliche Körperteile des Bedieners derart gekennzeichnet werden, dass sie für die bewegten Maschinenelemente relevant sind.

Die Erfindung weist ein, insbesondere personenseitiges, Erkennungssystem auf, durch das die Position des Bedieners erkannt wird. Hierfür können Transponder üblicher Bauart Verwendung finden, die z.B. in die Handschuhe eingearbeitet werden können, aber auch in andere Kleidungsstücke, die der Bediener für das Arbeiten an der Maschine tragen muss, oder die der Bediener auch in anderer Form am Körper tragen kann.

Die Erfindung weist außerdem ein, insbesondere maschinenseitiges, Erkennungssystem für die Position der Extremitäten des Bedieners auf. Hierdurch wird die Position der Extremitäten des Bedieners in Bezug auf die bewegten Maschinenelemente ermittelt, um zu verhindern, dass der Bediener mit seinen Extremitäten die bewegten Maschinenelemente erreicht und eine Verletzung erleidet. Hierfür können beispielsweise fotoelektrische Sensoren, Laserscanner oder andere bekannte Systeme verwendet werden.

Wenn der Bediener den so definierten Sicherheitsbereich mit seinen Extremitäten überschreitet bzw. in diesen eindringt, wird das Erkennungssystem aktiviert, und es wird mittels einer Bremseinrichtung, vorzugsweise in Form einer Bremszange, das bewegte Maschinenelement unmittelbar stillgesetzt. Hierdurch wird verhindert, dass sich der Bediener verletzt.

Die Bremszange ist derart angebracht, dass sie mittelbar oder unmittelbar auf das bewegte Maschinenelement einwirkt. Daher sind die Nachlaufzeiten oder Nachlaufwege beinahe Null und in jedem Fall derart klein, dass der Bediener nicht die Möglichkeit hat, sich zu verletzen.

Wird die Notbremsung eingeleitet, weil der Bediener beispielsweise mit seinen Händen in den Sicherheitsbereich eingedrungen ist, wird die Bremszange geschlossen und das bewegte Maschinenelement stillgesetzt.

Über ein Steuerungsmodul, das auch die Positionserkennungen auswertet, wird die Bremszange angesteuert und gleichzeitig auch die Energieversorgung der Maschine unterbrochen bzw. freigegeben.

Durch den Bediener ist keine aufwendige Rückstellung der Sicherheitseinrichtung erforderlich. Diese erfolgt beim Einschalten der Maschine.

Die Erfindung wird im Folgenden anhand der Zeichnung näher erläutert. Hierbei zeigen:

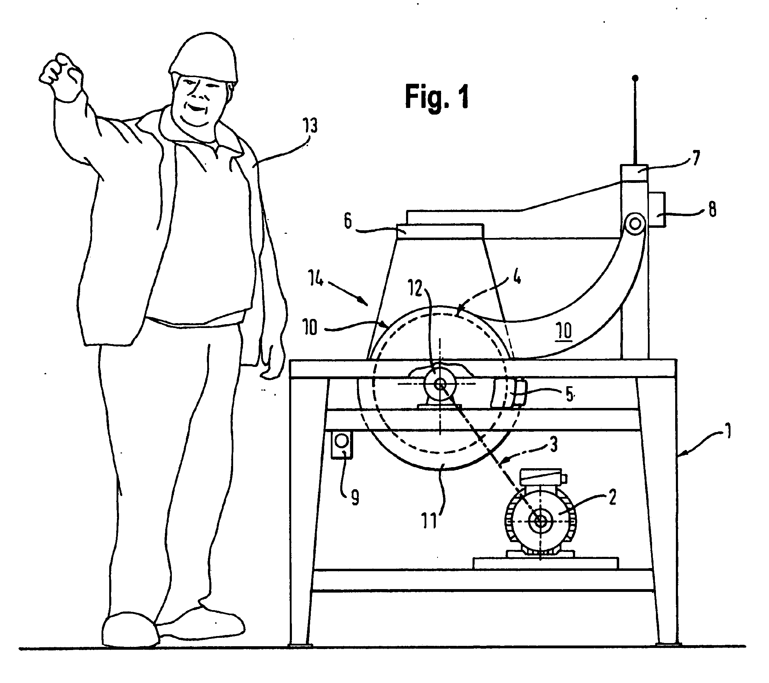

- Fig. 1:: schematisch die erfindungsgemäße Sicherheitsbremseinrichtung in Verbindung mit einer Kreissäge in Seitenansicht und
- Fig. 2:: in Stirnansicht.

Das dargestellte Ausführungsbeispiel zeigt die erfindungsgemäße Anwendung der Sicherheitsbremsvorrichtung am Kreissägeblatt einer Tischkreissäge, um dadurch zu verhindern, dass der Bediener mit seinen Extremitäten, im vorliegenden Fall mit seinen Händen, unbeabsichtigt das Sägeblatt berühren kann.

Im Einzelnen weist die Kreissäge ein Maschinengestell 1 auf, in dem ein Elektromotor 2 angeordnet ist, der über einen Riementrieb 3 mit dem Antrieb des Kreissägeblattes 4 verbunden ist.

Wie dargestellt, ist unterhalb des eigentlichen Arbeitsbereiches des Kreissägeblattes 4, d. h. im vorliegenden Fall unterhalb des Arbeitstisches, eine Bremszange 5 vorgesehen, welche über eine geeignete Steuerung unmittelbar auf das Kreissägeblatt 4 einwirken kann, und zwar derart, dass dieses in Bruchteilen von Sekunden zum Stillstand kommt.

Wie weiterhin aus der Zeichnung ersichtlich, sind Sicherheitssensoren 6 sowie Sensoren 7 zur Anwesenheitsüberwachung vorgesehen.

Ein Schaltschrank 8 enthält die erforderlichen Steuerungen, wobei über einen Hauptschalter 9 die gesamte Anlage ein- bzw. ausgeschaltet werden kann.

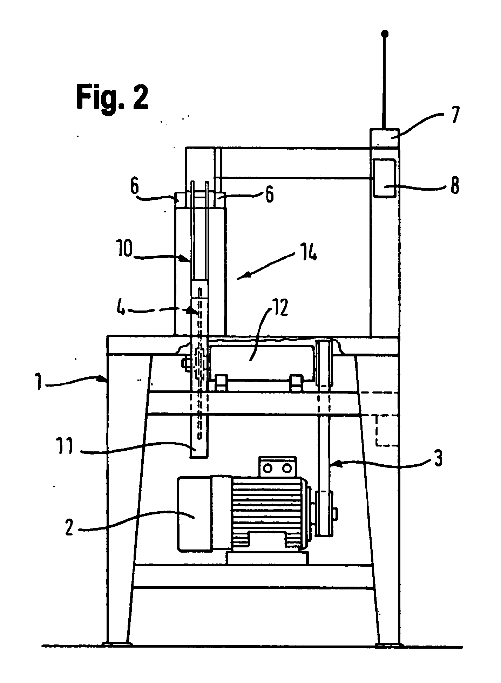

Das Kreissägeblatt 4 ist in üblicher Weise mit einer beweglichen Schutzabdeckung 10 sowie auch mit einer unterseitigen festen Schutzabdeckung 11 (siehe Fig. 2) versehen.

Der vom Elektromotor 2 betätigte Riementrieb 3 wirkt auf den eigentlichen Antrieb 12 des Kreissägeblattes 4, wie deutlich aus Fig. 2 ersichtlich.

Ein Bediener 13, der in der zuvor beschriebenen Weise eine nicht näher dargestellte Einrichtung zur Erkennung seiner Position aufweist, beispielsweise einen in einen Handschuh des Bedieners eingenähten Transponder, kann ungehindert im Bereich des Kreissägeblattes 4 außerhalb des durch die Sicherheitssensoren 6 überwachten Sicherheitsbereichs 14 arbeiten. Gelangt dieser jedoch mit seinen Händen in diesen Sicherheitsbereich 14 hinein, wird sofort durch eine entsprechende Steuerung die Bremszange 5 betätigt, die, wie dargelegt, innerhalb von Bruchteilen einer Sekunde auf das Kreissägeblatt 4 einwirkt und dieses vollständig zum Stillstand bringt.

Im Folgenden sei nochmals dargelegt, wie das dargestellte Schutzsystem aufgebaut ist:
1. Einrichtung zur Erkennung der Position des Bedieners 13, z. B. mittels eines Transponders oder eines ähnlichen Gerätes, wodurch die Inbetriebnahme der Maschine nur ermöglicht wird, wenn sich der Bediener 13 im definierten Nah- bzw. Bedienbereich, d.h. dem Arbeitsbereich der Maschine, die es erlaubt, die Arbeitstätigkeiten, also die Beschickung und Entnahme der Werkstücke auszuführen, aufhält. Hierdurch wird gewährleistet, dass die Maschine nicht unbeaufsichtigt in Betrieb bleibt.
2. Einrichtung zur Erkennung der Position der Extremitäten des Bedieners 13 innerhalb des definierten Sicherheitsbereichs.
   Hierfür können beispielsweise reflektierende Materialien Verwendung finden, aus denen Handschuhe für den Bediener gefertigt werden. Um nun die Position der Hände zu erkennen, können fotoelektrische Sensoren Verwendung finden, die an der Maschine positioniert werden. Um die Position der Extremitäten des Bedieners zu erkennen, können auch andere hierfür geeignete Systeme Verwendung finden, wie optoelektrische Scanner, Lasereinrichtungen, Transpondersysteme oder ähnliches.
3. Bremseinrichtung, die direkt am Sägeblatt wirkt, somit das Sägeblatt unmittelbar zum Stillstand bringt, wenn sich die Extremitäten zu nahe an das Sägeblatt annähern oder wenn der Bediener den Arbeitsbereich verlässt.
   Die Bremseinrichtung besteht vorzugsweise aus einer Bremszange 5, die elektromechanisch, pneumatisch, hydraulisch, rein durch Federkraft oder eine andere Energieform betätigt werden kann.
   Die Bremseinrichtung ist derart angeordnet, dass der Arbeitsbereich nicht eingeschränkt wird, beispielsweise also an der Tischkreissäge unterhalb der Arbeitsebene und somit vom Arbeitstisch verdeckt. Diese Bremseinrichtung kann gemeinsam mit den an den meisten Maschinen vorhandenen elektromechanisch gebremsten Antrieben verwendet werden.
4. Elektronische oder elektrische Steuerung mit folgenden Funktionen:
   a) die Funktion der Maschine nur dann zu ermöglichen, wenn sich der Bediener im Arbeitsbereich befindet; hierfür wird die Energieversorgung der Maschine unterbrochen;
   b) Steuerung der Bremseinrichtung, durch die das Sägeblatt 4 unmittelbar stillgesetzt und die Antriebsenergie unterbrochen wird, sobald der Bediener 13 den Arbeitsbereich verlässt;
   c) Steuerung der Bremseinrichtung, durch die das Sägeblatt 4 unmittelbar stillgesetzt und die Antriebsenergie unterbrochen wird, sobald der Bediener 13 mit seinen Extremitäten den Sicherheitsbereich 14 erreicht.

Der Einsatz der beschriebenen Sicherheitsbremseinrichtung ermöglicht es, den Bediener und im speziellen seine Extremitäten während sämtlicher Arbeitsvorgänge bestmöglich zu schützen und so Unfälle zu verhindern. Darüber hinaus wird die Maschine stillgesetzt, sobald der Bediener den definierten Arbeitsbereich verlässt, wodurch die Maschine nicht unbeaufsichtigt in Funktion bleibt und keine anderen Personen unnötig gefährdet werden.

Sollte der Bediener dem gefährlichen bewegten Maschinenelement, wie z.B. der Kreissäge, zu nahe kommen, wird dieses unmittelbar stillgesetzt, so dass keine Verletzungen möglich sind.

Durch die einfache Bauweise kann das Gesamtsystem an allen Maschinen verbaut oder auch nachträglich nachgerüstet werden, wobei verschiedenste technische Lösungen für die Positionserkennung des Bedieners bzw. dessen Extremitäten möglich sind.

Hinsichtlich vorstehend nicht näher erläuterter Merkmale der Erfindung wird im Übrigen ausdrücklich auf die Beschreibung sowie die Patentansprüche verwiesen.

## Patentansprüche

1. Sicherheitsbremseinrichtung für bewegte Maschinenelemente zur Verhinderung von Verletzungen des Bedieners (13) einer Maschine umfassend
eine Einrichtung zur Erkennung der Position von Bedienerextremitäten innerhalb eines Sicherheitsbereichs (14),
**gekennzeichnet durch**,
eine Einrichtung zur Erkennung der Position des Bedieners (13), um die Inbetriebnahme der Maschine nur dann zu ermöglichen, wenn sich der Bediener (13) in einem definierten Arbeitsbereich aufhält, in dem der Bediener die Maschine mit Werkstücken beschicken oder Werkstücke aus dieser entnehmen kann, wobei die Maschine stillgesetzt wird, sobald der Bediener (13) den Arbeitsbereich verlässt und
eine Bremseinrichtung, mittels der das bewegte Maschinenelement (4) unmittelbar stillsetzbar ist, wenn die Bedienerextremitäten in den Sicherheitsbereich (14) eindringen.

2. Sicherheitsbremseinrichtung nach Anspruch 1, **dadurch gekennzeichnet, dass** die Einrichtung zur Erkennung der Position des Bedieners einen Transponder aufweist, den der Bediener (13) direkt oder indirekt, beispielsweise mittels eines Kleidungsstücks, am Körper trägt.

3. Sicherheitsbremseinrichtung nach Anspruch 1 oder 2, **dadurch gekennzeichnet, dass** die Einrichtung zur Erkennung der Position der Bedienerextremitäten fotoelektrische Sensoren oder Laserscanner aufweist, die an der Maschine angebracht sind.

4. Sicherheitsbremseinrichtung nach einem der vorhergehenden Ansprüche, **dadurch gekennzeichnet, dass** die Bremseinrichtung eine Bremszange (5) aufweist, die mittels einer Steuerung auf das bewegte Maschinenelement einwirkt.

5. Sicherheitsbremseinrichtung nach Anspruch 4, **dadurch gekennzeichnet, dass** die Steuerung für die Bremseinrichtung elektrisch bzw. elektronisch arbeitet.

6. Sicherheitsbremseinrichtung nach Anspruch 4, **dadurch gekennzeichnet, dass** die Bremszange (5) elektrisch betätigbar ist.

7. Sicherheitsbremseinrichtung nach Anspruch 4, **dadurch gekennzeichnet, dass** die Bremszange (5) hydraulisch betätigbar ist..

8. Sicherheitsbremseinrichtung nach Anspruch 4, **dadurch gekennzeichnet, dass** die Bremszange (5) pneumatisch betätigbar ist.

9. Sicherheitsbremseinrichtung nach Anspruch 4, **dadurch gekennzeichnet, dass** die Bremszange (5) mechanisch betätigbar ist.

10. Sicherheitsbremseinrichtung nach einem der vorgehenden Ansprüche, **dadurch gekennzeichnet, dass** sie sich selbsttätig bei jedem Maschinenstart aktiviert.

## Claims

1. Safety brake device for moving machine elements to prevent injury to the operator (13) of a machine, comprising
an arrangement for detecting the position of the operator's extremities within a safety area (14),
**characterised by**
an arrangement for detecting the position of the operator (13), in order to permit operation of the machine only if the operator (13) remains within a defined working area in which the machine can be fed with workpieces or workpieces can be removed from the machine, wherein the machine is shut down as soon as the operator (13) leaves the working area and
a brake device by means of which the moving machine element (4) can be immediately stopped if the operator's extremities go beyond the safety area (14).

2. Safety brake device according to claim 1, **characterised in that** the arrangement for detecting the operator's position features a transponder worn, directly or indirectly, by the operator (13), for example by means of an article of clothing.

3. Safety brake device according to claim 1 or 2, **characterised in that** the arrangement for detecting the position of the operator's extremities features photoelectric sensors or laser scanners which are attached to the machine.

4. Safety brake device according to one of the preceding claims, **characterised in that** the brake device features a brake calliper (5) which acts on the moving machine element (4) by means of a control.

5. Safety brake device according to claim 4, **characterised in that** the control for the brake device functions electrically or electronically.

6. Safety brake device according to claim 4, **characterised in that** the brake calliper (5) is electrically operable.

7. Safety brake device according to claim 4, **characterised in that** the brake calliper (5) is hydraulically operable.

8. Safety brake device according to claim 4, **characterised in that** the brake calliper (5) is pneumatically operable.

9. Safety brake device according to claim 4, **characterised in that** the brake calliper (5) is mechanically operable.

10. Safety brake device according to one of the preceding claims, **characterised in that** it is activated automatically each time the machine is started.

## Revendications

1. Système de frein de sécurité pour des éléments de machine mobiles afin d'empêcher des blessures de l'opérateur (13) d'une machine, comprenant
un moyen pour reconnaître la position des extrémités de l'opérateur à l'intérieur d'une zone de sécurité (14),
**caractérisé par**
un moyen pour reconnaître la position de l'opérateur (13), afin de rendre possible la mise en service de la machine uniquement si l'opérateur (13) se trouve dans une zone de travail définie dans laquelle l'opérateur peut charger des pièces à oeuvrer dans la machine ou enlever des pièces à oeuvrer hors de celle-ci, de sorte que la machine est mise à l'arrêt dès que l'opérateur (13) quitte la zone de travail, et
un système de frein au moyen duquel l'élément de machine mobile (4) est susceptible d'être directement mis à l'arrêt quand les extrémités de l'opérateur pénètrent dans la zone de sécurité (14).

2. Système de frein de sécurité selon la revendication 1, **caractérisé en ce que** le moyen pour reconnaître la position de l'opérateur comprend un transpondeur que l'opérateur (13) porte sur le corps, soit directement soit indirectement, par exemple au moyen d'un vêtement.

3. Système de frein de sécurité selon la revendication 1 ou 2, **caractérisé en ce que** le moyen pour reconnaître la position des extrémités de l'opérateur comprend des capteurs photoélectriques ou des scanneurs à laser, qui sont montés sur la machine.

4. Système de frein de sécurité selon l'une des revendications précédentes, **caractérisé en ce que** le système de frein comprend une pince de frein (5) qui agit sur l'élément de machine mobile au moyen d'une commande.

5. Système de frein de sécurité selon la revendication 4, **caractérisé en ce que** la commande pour le système de frein fonctionne électriquement ou électroniquement.

6. Système de frein de sécurité selon la revendication 4, **caractérisé en ce que** la pince de frein (5) peut être actionnée électriquement.

7. Système de frein de sécurité selon la revendication 4, **caractérisé en ce que** la pince de frein (5) peut être actionnée hydrauliquement.

8. Système de frein de sécurité selon la revendication 4, **caractérisé en ce que** la pince de frein (5) peut être actionnée pneumatiquement.

9. Système de frein de sécurité selon la revendication 4, **caractérisé en ce que** la pince de frein (5) peut être actionnée mécaniquement.

10. Système de frein de sécurité selon l'une des revendications précédentes, **caractérisé en ce qu'**il s'active automatiquement à chaque démarrage de la machine.
